# FASCICULE DE BREVET EUROPEEN

(11) **EP 1 857 316 B1**
(45) Date de publication et mention de la délivrance du brevet: **01.07.2009**
(21) Numéro de dépôt: 07290614.2
(22) Date de dépôt: 15.05.2007
(51) Int. Cl.: B60K 11/04, B62D 25/08, B62D 65/02, F16F 1/377

(54) **Face avant de véhicule automobile et véhicule automobile associé**
Frontseite eines Kraftfahrzeugs und zugehöriges Kraftfahrzeug
Front side of an automobile vehicle and associated automobile vehicle

(30) Priorité: 15.05.2006 FR 0604301
(43) Date de publication de la demande: 21.11.2007
(73) Titulaire: Faurecia Cooling Systems, 92000 Nanterre (FR)
(72) Inventeur: Gassmann, Jean-Marie, 90500 Beaucourt (FR)
(74) Mandataire: Blot, Philippe Robert Emile

(56) Documents cités:
- EP-A- 1 110 788
- JP-A- 60 027 723
- US-A- 5 996 684
- US-A1- 2004 011 577

## Description

La présente invention concerne une face avant de véhicule automobile, selon le préambule de la revendication 1.

On connaît de EP-A-1 110 788 une face avant de véhicule automobile comprenant un cadre destiné à être relié à la caisse du véhicule et un module de refroidissement solidaire du cadre. Le module de refroidissement est calé en force dans le cadre, ce qui facilite son montage.

Toutefois, lorsqu'un groupe moto-ventilateur est porté par le module de refroidissement, il est monté directement sur l'échangeur de chaleur, sans découplage mécanique avec l'échangeur. Dans une variante, le groupe moto-ventilateur est porté directement par la face avant.

Par suite, des vibrations du groupe moto-ventilateur sont transmises directement à l'échangeur de chaleur ou au cadre. Les propriétés acoustiques de la face avant ne sont donc pas entièrement satisfaisantes.

JP 60-27723 décrit une face avant selon le préambule de la revendication 1. US 5 996 684 décrit un échangeur pour une face avant muni de lames d'amortissement.

Le but de l'invention est d'améliorer les propriétés acoustiques de la face avant, tout en préservant un montage simple et robuste des différents éléments de la face avant.

A cet effet, l'invention a pour objet une face avant selon la revendication 1.

La face avant selon l'invention peut comprendre l'une ou plusieurs des caractéristiques qui font l'objet des revendications 2 à 10.

L'invention a en outre pour objet un véhicule automobile selon la revendication 11.

L'invention sera mieux comprise à la lecture de la description qui va suivre, donnée uniquement à titre d'exemple, et faite en se référant aux dessins sur lesquels :
- la Figure 1 est une vue en perspective éclatée de trois-quarts face d'une première face avant selon l'invention ;
- la Figure 2 est une vue d'un détail de la Figure 1, représentant une patte d'amortissement du groupe moto-ventilateur de la face avant de la Figure 1 ;
- la Figure 3 est une vue en coupe suivant un plan longitudinal vertical de la face avant de la Figure 1 ;
- la Figure 4 est une vue analogue à la Figure 2, avant le montage de la patte de fixation ;
- la Figure 5 est une vue en élévation arrière d'une deuxième face avant selon l'invention, l'échangeur de chaleur ayant été retiré.

Dans tout ce qui suit, les orientations sont les orientations habituelles d'un véhicule automobile. Ainsi, les termes « avant », « arrière », « gauche », « droit », « transversal », « longitudinal », « supérieur », « inférieur » s'entendent par rapport au sens normal de circulation du véhicule, et à la position d'un conducteur.

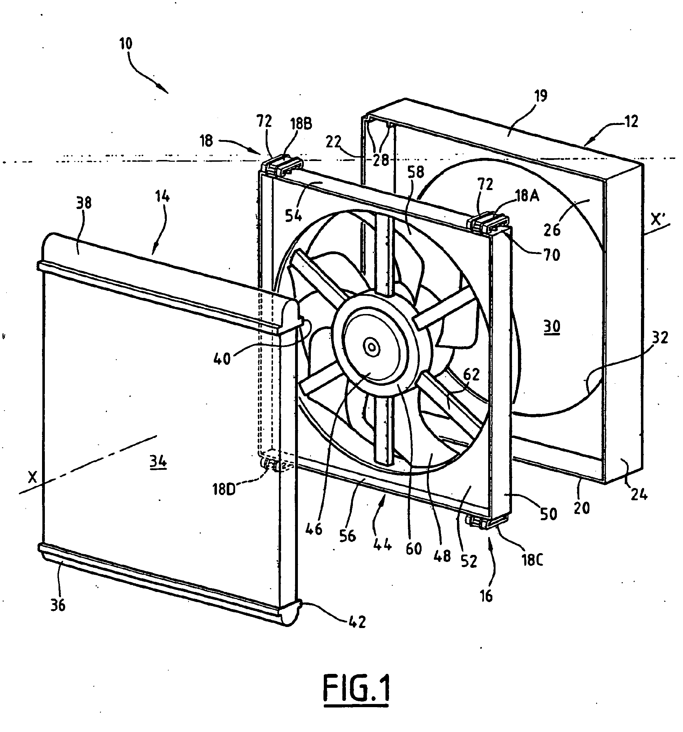

La face avant 10 représentée sur les Figures 1 à 4 est destinée à être fixée à l'avant de la caisse d'un véhicule automobile.

Cette face avant 10 comprend un cadre 12 solidaire de la caisse du véhicule automobile, un échangeur de chaleur 14 monté solidaire du cadre 12, et un groupe moto-ventilateur 16 calé en force entre le cadre 12 et l'échangeur de chaleur 14 par l'intermédiaire d'une pluralité de pattes d'amortissement 18.

Le cadre 12 comprend une structure creuse de section carrée définie par une paroi supérieure 19 et une paroi inférieure 20 sensiblement horizontales, raccordées entre elles par une paroi gauche 22 et une paroi droite 24 sensiblement verticales.

Le cadre 12 comporte un fond 26 qui s'étend à l'avant des parois 19, 20, 22, 24 de la structure.

Comme illustré par la Figure 1, la paroi supérieure 19 définit des butées 28 de blocage transversal d'au moins une patte d'amortissement 18, qui font saillie à l'intérieur de l'espace 30 délimité par les parois 19 à 24, à l'arrière du fond 26.

Le fond 26 délimite une ouverture centrale 32 d'axe X-X' et de contour circulaire, débouchant dans l'espace 30.

L'échangeur de chaleur 14 comprend des moyens 34 d'échange thermique disposés en regard du groupe moto-ventilateur 16.

Les moyens 34 s'étendent verticalement entre une poutre inférieure 36 de fixation transversale et une poutre supérieure 38 de fixation transversale. Chaque poutre 36, 38 comprend une baguette transversale de blocage 40, 42 du groupe moto-ventilateur 16, en saillie vers l'avant.

Les baguettes 40, 42 s'étendent respectivement en regard de la paroi supérieure 19 et de la paroi inférieure 20 du cadre 12.

L'échangeur de chaleur 14 est fixé sur le cadre 12 par des moyens de fixation (non représentés) qui permettent de bloquer en position l'échangeur 14 par rapport au cadre 12.

Le groupe moto-ventilateur 16 comprend un support 44, un moteur 46, et une hélice 48 entraînée en rotation par le moteur 46 autour de l'axe X-X'.

Le support 44 comprend un élément de structure arrière 50 de section sensiblement carrée inférieure à la section du cadre 12, et un carénage 52 disposé à l'avant de l'élément de structure 50 pour entourer la périphérie de l'hélice 48.

L'élément de structure 50 présente un bandeau supérieur 54 horizontal et un bandeau inférieur 56 horizontal.

Le bandeau supérieur 54 s'étend, à l'avant, en regard de la paroi supérieure 19, et, à l'arrière, en regard de la baguette supérieure 40. De même, le bandeau inférieur 56 s'étend, à l'avant, en regard de la paroi inférieure 20 et, à l'arrière, en regard de la baguette inférieure 42.

La distance qui sépare le bandeau supérieur 54 du bandeau inférieur 56 est inférieure à la distance qui sépare la paroi supérieure 19 de la paroi inférieure 20, d'une part, et à la distance qui sépare la baguette supérieure 40 de la baguette inférieure 42, d'autre part.

Un interstice est donc défini entre chaque bandeau 54, 56 et les parois 19, 20 respectives, ainsi qu'entre chaque bandeau 54, 56 et les baguettes 40, 42 respectives.

Le carénage 52 obture partiellement l'élément de structure 50 à l'avant. Il définit un passage cylindrique 58 d'axe X-X', de diamètre sensiblement égal aux diamètre de la périphérie de l'hélice 48. Le passage 58 s'étend en regard de l'ouverture centrale 32.

Le carénage 52 comprend une couronne 60 de support du moteur 46 disposée à l'arrière du passage 58, et raccordée à l'élément de structure 50 par des bras de liaison 62. Le moteur 46 est fixé sur la couronne 60.

L'hélice 48 est fixée à l'avant du moteur 46 dans le passage 58 pour être entraînée en rotation autour de l'axe X-X' par le moteur 46.

Dans l'exemple illustré par la Figure 1, le groupe moto-ventilateur 16 comprend quatre pattes d'amortissement 18A à 18D placées respectivement aux quatre coins de l'élément de structure 50.

Les pattes supérieures 18A, 18B font saillie vers le haut par rapport au bandeau supérieur 54 alors que les pattes inférieures 18C, 18D font saillie vers le bas à partir du bandeau inférieur 56. Chaque patte supérieure 18A; 18B est située à l'opposé d'une patte inférieure 18C, 18D le long d'un axe vertical.

Les pattes 18A à 18D sont de structures analogues. Par suite, seule la patte supérieure droite 18A sera décrite en détail.

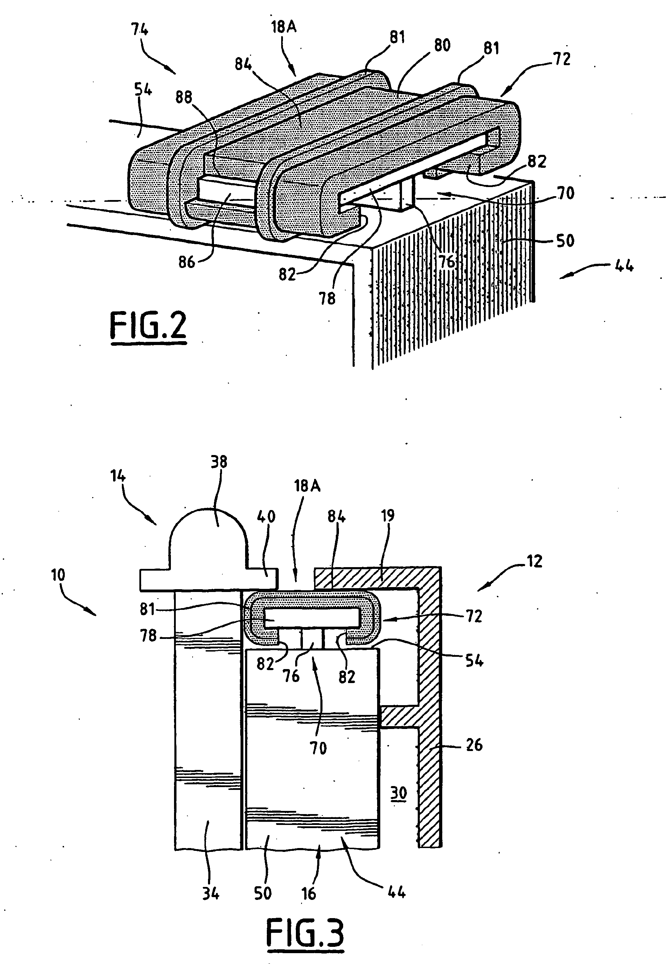

Comme illustré par les Figures 2 à 4, la patte 18A comprend une base rigide 70 solidaire du bandeau supérieur 54, une chaussette souple de calage 72 enroulée sur la base 70, et des moyens 74 de blocage en position de la chaussette 72 sur la base 70.

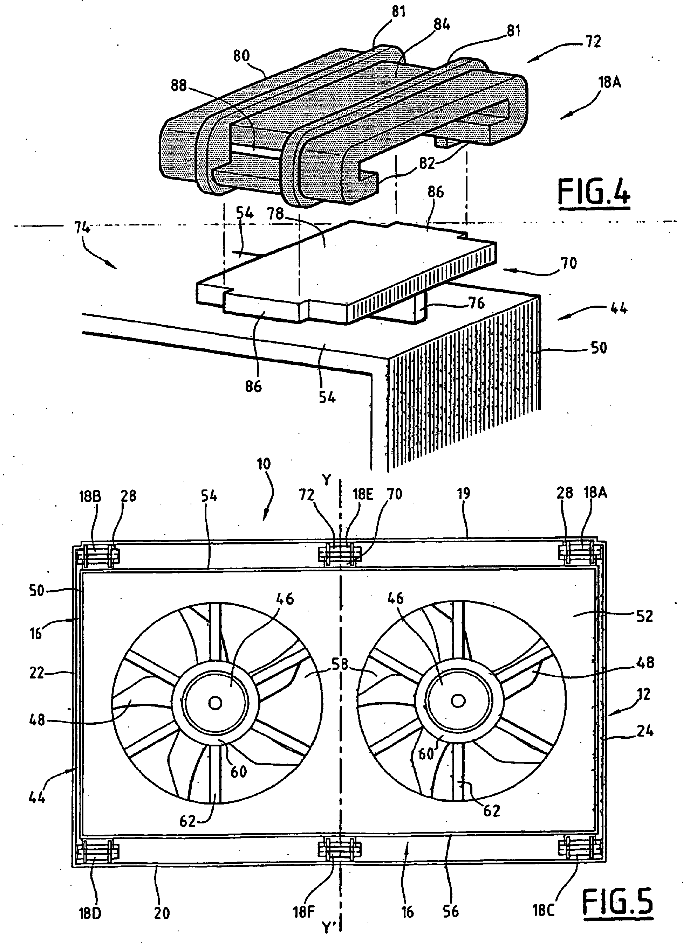

Comme illustré par la Figure 4, la base 70 présente une section verticale longitudinale en forme de T. Elle comprend ainsi une lame 76 qui fait saillie vers le haut par rapport au bandeau 54 dans un plan vertical transversal et un socle 78 d'appui de la chaussette 72 sensiblement horizontal.

La base 70 est par exemple venue de matière avec le support 44.

La chaussette 72 est réalisée à base d'un matériau déformable élastiquement comme du caoutchouc.

La chaussette 72 comprend un corps 80 appliqué sur le socle 78 et des nervures 81 de compensation de jeu.

Le corps 80 est enroulé autour du bord avant et du bord arrière du socle 78. Il présente ainsi une section en forme de C s'ouvrant vers le bas qui définit deux bords libres 82. Les bords 82 s'étendent en regard de la lame 70, à l'avant et à l'arrière de cette lame 70.

Les nervures 81 s'étendent longitudinalement de part et d'autre de l'axe X-X'. Elles font saillie vers le haut par rapport à une surface supérieure 84 d'appui horizontale définie par le corps 80.

La surface supérieure 84 et les nervures 81 sont appliquées à l'avant contre la paroi supérieure 19 à l'intérieur de l'espace 30, et à l'arrière contre la baguette supérieure 40.

La distance qui sépare la surface supérieure d'appui 84 de la patte supérieure 18A à la surface inférieure d'appui de la patte inférieure opposée 18C est sensiblement égale à la distance qui sépare la paroi supérieure 19 de la paroi inférieure 20, et à la distance qui sépare la baguette 40 de la baguette inférieure 42.

Ainsi, comme illustré par la Figure 3, le corps 80 et les nervures 81 sont enserrés à l'avant entre le socle 78 et la paroi supérieure 19, et sont enserrés à l'arrière entre le socle 78 et la baguette supérieure 40.

Les moyens de blocage 84 comprennent des ergots 86 qui font saillie longitudinalement à l'avant et à l'arrière du socle 78, et des encoches 88 de formes complémentaires ménagées à l'avant et à l'arrière du corps 80. Les saillies 86 sont reçues dans les encoches 88 pour bloquer les chaussettes 72 en position sur le socle 78.

Le montage de la face avant 10 selon l'invention va maintenant être décrit.

Initialement, le moteur 46 et l'hélice 48 sont montés sur le cadre 44 du groupe moto-ventilateur 16. Le support 44 a par exemple été réalisé par moulage par injection d'un seul tenant de l'élément de structure 50 et des bases rigides 70. Les chaussettes 72 sont ensuite montées sur les bases 70 et maintenues en position par encliquetage des ergots 86 dans les encoches 88.

Ensuite, le groupe moto-ventilateur 16 est calé dans le cadre 12. A cet effet, une partie avant des pattes 18A à 18D est calée en force entre la paroi supérieure 19 et la paroi inférieure 20 jusqu'à ce que l'avant du carénage 52 bute contre le fond 26. En outre, au moins une patte 18B est calée transversalement entre les butées 28 pour bloquer transversalement le support 44 par rapport au cadre 12.

Le groupe moto-ventilateur 16 est alors bloqué en position suivant un axe vertical par les pattes d'amortissement 18A à 18D, et suivant un axe horizontal transversal par les butées 28.

Il est en outre bloqué longitudinalement dans une première direction vers l'avant par le cadre 12.

Le calage des pattes 18A à 18D est facilité par la présence des nervures 81 qui compensent le jeu entre les surfaces d'appui 84 des pattes 19 et les parois 19, 20 respectives en regard du cadre 12.

En outre, il n'est pas nécessaire d'ajuster précisément les dimensions des pattes d'amortissement 18A à 18D sur la structure lors du montage de la face avant 10, ce qui facilite grandement ce montage.

Pour bloquer définitivement en position le groupe moto-ventilateur 16, l'échangeur de chaleur 14 est ensuite monté sur le cadre 12 à l'arrière du groupe moto-ventilateur 16, avec interposition de ce groupe 16 entre le cadre 12 et l'échangeur 14.

Lors de cette opération, les parties arrière des pattes 18A à 18D sont calées en force entre la baguette supérieure 40 et la baguette inférieure 42. Comme précédemment, les nervures 81 et les chaussettes souples 72 compensent le jeu de montage éventuel entre les surfaces d'appui 84 des pattes 18A à 18D et les baguettes 40, 42 en regard respectives.

Puis, les moyens de fixation entre le cadre 12 et l'échangeur 14 sont mis en place pour bloquer définitivement le groupe moto-ventilateur 16 dans une deuxième direction vers l'arrière le long de l'axe X-X'.

Les chaussettes 72 en matériau souple permettent de découpler mécaniquement le groupe moto-ventilateur 16 à la fois du cadre 12 et de l'échangeur 16.

En fonctionnement, le découplage entre le groupe moto-ventilateur 16, le cadre 12, et l'échangeur de chaleur 14 réduit la transmission des vibrations produites par la rotation de l'hélice 48, vers le cadre 12 ou vers l'échangeur 14.

Les propriétés acoustiques de la face avant 10 sont donc améliorées, tout en conservant un montage simple et robuste de la face avant 10.

Dans la variante représentée sur la Figure 5, le cadre 12 de la face avant 10 est de forme sensiblement rectangulaire allongée transversalement. Le groupe moto-ventilateur 16 porte deux hélices 48 espacées transversalement. Dans cette variante, le groupe moto-ventilateur 16 comprend deux pattes d'amortissement additionnelles 18E, 18F placées le long d'un axe vertical médian Y-Y' s'étendant entre les hélices 48, respectivement sur le bandeau supérieur 54 et sous le bandeau inférieur 56.

## Revendications

1. Face avant (10) de véhicule automobile, du type comprenant :
- un cadre (12) destiné à être relié à la caisse du véhicule ;
- un échangeur de chaleur (14) monté sur le cadre (12) ;
- un groupe moto-ventilateur (18) comprenant :
• un support (44) fixé sur le cadre (12)
• un moteur (46) ; et
• une hélice (48) entraînée en rotation autour d'un axe (X-X'), le moteur (46) et l'hélice (48) étant montés sur le support (44).
le groupe moto-ventilateur (16) comprenant une pluralité de pattes d'amortissement (18) au moins partiellement déformables solidaires du support (44), **caractérisé en ce que** le support (44) est fixé sur le cadre (12) par calage en force de chaque patte (18), dans une première direction entre le support (44) et le cadre (12), et dans une deuxième direction opposée à la première direction, entre le support (44) et l'échangeur (14), le groupe moto-ventilateur (16) étant interposé entre la cadre (12) et l'échangeur de chaleur (14).

2. Face avant (10) selon la revendication 1, **caractérisée en ce que** le support (44) est fixé par calage en force de chaque patte (18) à l'avant entre le support (44) et le cadre (12), et à l'arrière entre le support (44) et l'échangeur (14).

3. Face avant (10) selon l'une des revendications 1 ou 2, **caractérisée en ce que** chaque patte d'amortissement (18) comprend une base rigide (70) en saillie par rapport au support (44), et une chaussette souple (72) montée sur la base (70) est définissant une surface d'appui (84) appliquée sur le cadre (12) dans la première direction, et appliquée sur l'échangeur (14) dans la deuxième direction.

4. Face avant (10) selon la revendication 3, **caractérisée en ce que** la base (70) fait saillie verticalement par rapport au support (44), les surfaces d'appui (84) s'étendant sensiblement horizontalement.

5. Face avant (10) selon l'une des revendications 3 ou 4, **caractérisée en ce que** la chaussette (72) comprend au moins une nervure (81) d'ajustement de jeu qui fait saillie par rapport à la surface d'appui (84).

6. Face avant (10) selon l'une quelconque des revendications 3 à 5, **caractérisée en ce que** chaque patte d'amortissement (18) comprend des moyens (84) de fixation par encliquetage de la chaussette (72) sur la base (70) comportant une encoche (88) ménagée dans l'une de la chaussette (72) ou de la base (70), et un ergot (86) solidaire de l'autre de la chaussette (72) et de la base (70), l'ergot (86) étant engagé dans l'encoche (88).

7. Face avant (10) selon l'une quelconque des revendications précédentes, **caractérisée en ce que** le support (44) présente un contour définissant quatre coins, le groupe moto-ventilateur (16) comprenant au moins une patte d'amortissement (18) disposée au voisinage de chaque coin.

8. Face avant (10) selon l'une quelconque des revendications précédentes, **caractérisée en ce que** le support (44) porte au moins deux hélices (48), au moins une patte d'amortissement (18E, 18F) étant disposée entre les deux hélices (48).

9. Face avant (10) selon l'une quelconque des revendications précédentes, **caractérisée en ce qu'**elle comprend des moyens (28) de blocage transversal d'au moins une patte d'amortissement (18B) par rapport au cadre (12).

10. Face avant (10) selon l'une quelconque des revendications précédentes, **caractérisée en ce que** le support (44) comprend un carénage (52) qui comporte une couronne (60) de support du moteur (46).

11. Véhicule automobile, **caractérisé en ce qu'**il comprend une face avant (10) selon l'une quelconque des revendications précédentes.

## Claims

1. Front face (10) of an automotive vehicle, of the type comprising:
- a frame (12) which is intended to be connected to the chassis of the vehicle;
- a heat exchanger (14) which is mounted on the frame (12);
- a motor-fan assembly (16) comprising:
• a support (44) which is fixed on the frame (12)
• a motor (46); and
• a rotor (48) which is driven to rotate about an axis (X-X'), the motor (46) and the rotor (48) being mounted on the support (44),
the motor-fan assembly (16) including a plurality of shock-absorbing feet (18) which are at least partially deformable and integral with the support (44), **characterised in that** the support (44) is fixed on the frame (12) by forced wedging of each foot (18), in a first direction between the support (44) and the frame (12), and in a second direction opposite to the first direction between the support (44) and the exchanger (14), the motor-fan assembly (16) being interposed between the frame (12) and the heat exchanger (14).

2. Front face (10) according to claim 1, **characterised in that** the support (44) is fixed by forced wedging of each foot (18) at the front between the support (44) and the frame (12) and at the rear between the support (44) and the exchanger (14).

3. Front face (10) according to one of the claims 1 or 2, **characterised in that** each shock-absorbing foot (18) comprises a rigid base (70) which projects with respect to the support (44) and a flexible sleeve (72) which is mounted on the base (70) and defines a support surface (84) which is applied upon the frame (12) in the first direction and applied upon the exchanger (14) in the second direction.

4. Front face (10) according to claim 3, **characterised in that** the base (70) projects vertically with respect to the support (44), the support surfaces (84) extending substantially horizontally.

5. Front face (10) according to one of the claims 3 or 4, **characterised in that** the sleeve (72) includes at least one groove (81) for adjustment of the clearance which projects with respect to the support surface (84).

6. Front face (10) according to any of the claims 3 to 5, **characterised in that** each shock-absorbing foot (18) includes means (84) for fixing by locking of the sleeve (72) on the base (70) comprising a notch (88) which is provided in one of the sleeve (72) or of the base (70) and a lug (86) which is integral with the other of the sleeve (72) and of the base (70), the lug (86) being engaged in the notch (88).

7. Front face (10) according to any of the preceding claims, **characterised in that** the support (44) has a contour which defines four corners, the motor-fan assembly (16) including at least one shock-absorbing foot (18) which is disposed in the vicinity of each corner.

8. Front face (10) according to any of the preceding claims, **characterised in that** the support (44) carries at least two rotors (48), at least one shock-absorbing foot (18E, 18F) being disposed between the two rotors (48).

9. Front face (10) according to any of the preceding claims, **characterised in that** it includes means (28) for transverse locking of at least one shock-absorbing foot (18B) with respect to the frame (12).

10. Front face (10) according to any of the preceding claims, **characterised in that** the support (44) comprises a fairing (52) which includes a collar (60) for supporting the motor (46).

11. Automotive vehicle, **characterised in that** it includes a front face (10) according to any of the preceding claims.

## Patentansprüche

1. Frontseite (10) eines Kraftfahrzeugs, des Typs der aufweist:
- einen Rahmen (12), der zum Anschließen an die Karosserie des Fahrzeugs bestimmt ist,
- einen Wärmetauscher (14), der an dem Rahmen (12) montiert ist,
- einen Kühlerventilator-Satz (16), aufweisend:
• eine Halterung (44), die an dem Rahmen (12) befestigt ist,
• einen Motor (46), und
• ein Flügelrad (48), das drehbar um eine Achse (X-X') angetrieben wird, wobei der Motor (46) und das Flügelrad (48) an der Halterung (44) montiert sind,
wobei der Kühlerventilator-Satz (46) eine Mehrzahl von zumindest teilweise verformbaren Dämpfungsklammern (18) aufweist, die mit der Halterung (44) einstückig sind, **dadurch gekennzeichnet, dass** die Halterung (44) an dem Rahmen (12) durch eine Keilverbindung mittels Kraft von jeder Klammer (18) in einer ersten Richtung zwischen der Halterung (44) und dem Rahmen (12) und in einer zweiten Richtung entgegengesetzt zu der ersten Richtung zwischen der Halterung (44) und dem Tauscher (14) befestigt ist, wobei der Kühlerventilator-Satz (16) zwischen dem Rahmen (12) und dem Wärmetauscher (14) angeordnet ist.

2. Frontseite (10) gemäß Anspruch 1, **dadurch gekennzeichnet, dass** die Halterung (44) durch eine Keilverbindung mittels Kraft von jeder Klammer (18) vorne zwischen der Halterung (44) und dem Rahmen (12) und hinten zwischen der Halterung (44) und dem Tauscher (14) befestigt ist.

3. Frontseite (10) gemäß einem der Ansprüche 1 oder 2, **dadurch gekennzeichnet, dass** jede Dämpfungsklammer (18) aufweist: eine steife Basis (70), die relativ zu der Halterung (44) hervorsteht und eine nachgiebige Hülse (72) aufweist, die auf der Basis (70) montiert ist und eine Auflagefläche (84) definiert, die in der ersten Richtung an dem Rahmen (12) angebracht ist, und die in der zweiten Richtung auf dem Tauscher (14) angebracht ist.

4. Frontseite (10) gemäß Anspruch 3, **dadurch gekennzeichnet, dass** die Basis (70) relativ zu der Halterung (44) vertikal hervorsteht, wobei sich die Auflageflächen (84) im Wesentlichen horizontal erstrecken.

5. Frontseite (10) gemäß einem der Ansprüche 3 oder 4, **dadurch gekennzeichnet, dass** die Hülse (72) mindestens eine Spielpassungs-Rippe (81) aufweist, die relativ zu der Auflagefläche (84) hervorsteht.

6. Frontseite (10) gemäß einem der Ansprüche 3 bis 5, **dadurch gekennzeichnet, dass** jede Dämpfungsklammer (18) zur Einrast-Befestigung der Hülse (72) auf der Basis (70) Mittel (84) aufweist, die eine Kerbe (88), die in einer von der Hülse (72) oder der Basis (70) vorgesehen ist, und einen Verriegelungsstift (86) aufweisen, der mit der anderen von der Hülse (72) und der Basis (70) einstückig ist, wobei der Verriegelungsstift (86) in die Kerbe (88) eingreift.

7. Frontseite (10) gemäß einem der vorhergehenden Ansprüche, **dadurch gekennzeichnet, dass** die Halterung (44) einen Umriss aufweist, der vier Ecken definiert, wobei der Kühlerventilator-Satz (16) mindestens eine Dämpfungsklammer (18) aufweist, die benachbart zu jeder Ecke angeordnet ist.

8. Frontseite (10) gemäß einem der vorhergehenden Ansprüche, **dadurch gekennzeichnet, dass** die Halterung (44) mindestens zwei Flügelräder (48) trägt, wobei mindestens eine Dämpfungsklammer (18E, 18F) zwischen den beiden Flügelrädern (48) angeordnet ist.

9. Frontseite (10) gemäß einem der vorhergehenden Ansprüche, **dadurch gekennzeichnet, dass** sie Mittel (28) zum Quer-Blockieren von mindestens einer Dämpfungsklammer (18B) relativ zu dem Rahmen (12) aufweist.

10. Frontseite (10) gemäß einem der vorhergehenden Ansprüche, **dadurch gekennzeichnet, dass** die Halterung (44) eine Verkleidung (52) aufweist, die einen Kranz (60) zum Halten des Motors (46) aufweist.

11. Kraftfahrzeug, **dadurch gekennzeichnet, dass** es eine Frontseite (10) gemäß einem der vorhergehenden Ansprüche aufweist.
